# EUROPEAN PATENT APPLICATION

(11) **EP 1 956 274 A1**
(43) Date of publication of application: **13.08.2008**
(21) Application number: 08000433.6
(22) Date of filing: 11.01.2008
(51) Int. Cl.: F16J 13/14

(54) **Installation structure of bore plug**

(30) Priority: 09.02.2007 JP 2007030950
(71) Applicant: Carl Freudenberg KG, 69469 Weinheim (DE)
(72) Inventor: Kono, Toshiya, Fukushima-shi Fukushima 960-1193 (JP); Fukuoka, Satoshi, Fukushima-shi Fukushima 960-1193 (JP)

(57) **Abstract**

The invention provides an installation structure of a bore plug which securely prevents a bore plug (2) installed to a housing (12) in an end portion of a hole portion (11) from coming off, and prevents an internal space of the hole portion (11) from being narrowed by the bore plug (2). The bore plug (2) installed to the housing (12) formed in the hole portion (11) of a device (1) is constituted by a plug main body (21) in which an end plate portion (21a) and an outer peripheral tube portion (21c) having a larger diameter are formed in an outer periphery of the end plate portion via a shoulder portion (21 b), and a seal portion (22) integrally formed on an outer peripheral surface of the shoulder portion (21 b) by a rubber-like elastic material, a locked protruding portion (21 d) formed in an outer periphery of an end portion of the outer peripheral tube portion (21c) is snap engaged with a locking groove (12d) formed on an inner peripheral surface of the housing (12), and the seal portion (22) is brought into close contact with an inner peripheral surface in an opening end portion side of the housing (12) than the locking groove (12d) by a desired collapsing margin.

## Description

### Background of the Invention

### Field of the Invention

The present invention relates to an installation structure of a bore plug used for sealing a hole portion provided in a machine part, for example, a shaft hole of a differential side gear in a transmission of a vehicle or the like.

### Description of the Related Art

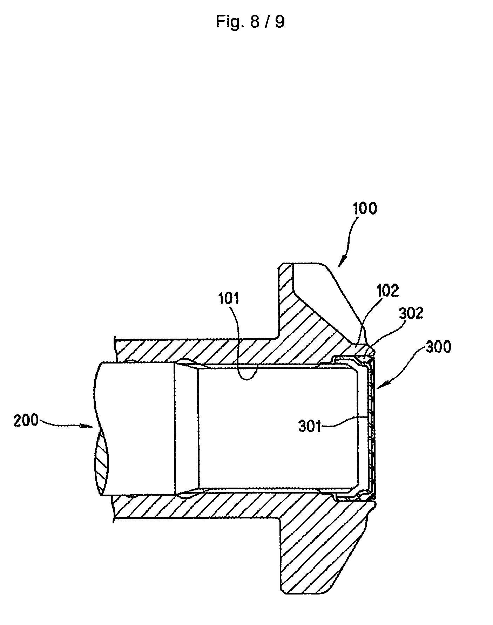

A bore plug for sealing an internal oil in a differential side is installed to a shaft hole of a differential side gear in a transmission of a vehicle. Fig. 8 is a cross sectional view showing a bore plug in accordance with a prior art by cutting along a plane passing through an axis thereof. In this Fig. 8, reference numeral 100 denotes a differential side gear. A shaft hole 101 in an inner periphery is attached to an outer periphery of a shaft end of a drive shaft 200 in accordance with a spline fitting. A bore plug 300 is sealed in a housing 102 formed in an opening end portion of the shaft hole 101 of the differential side gear 100.

The bore plug 300 is constituted by a plug main body 301 obtained by press molding a metal plate in a Petri dish shape, and a seal portion 302 integrally formed therewith by a rubber-like elastic material. The seal portion 302 is closely fitted to an inner peripheral surface of the housing 102 in a state of being suitably compressed, whereby the bore plug 300 is fixed, and seals the oil within the shaft hole 101.

However, in the installation structure of the bore plug 300 mentioned above, since a come-off prevention from the housing 102 depends only upon a friction force with the housing 102 caused by a compression reaction force of the seal portion 302, a deformation of the differential side gear 100 caused by a rotation is enlarged if an operating torque transmitted to the differential side gear 100 is great such as in a four-wheel drive vehicle, so that there is a problem that the bore plug 300 tends to come off.

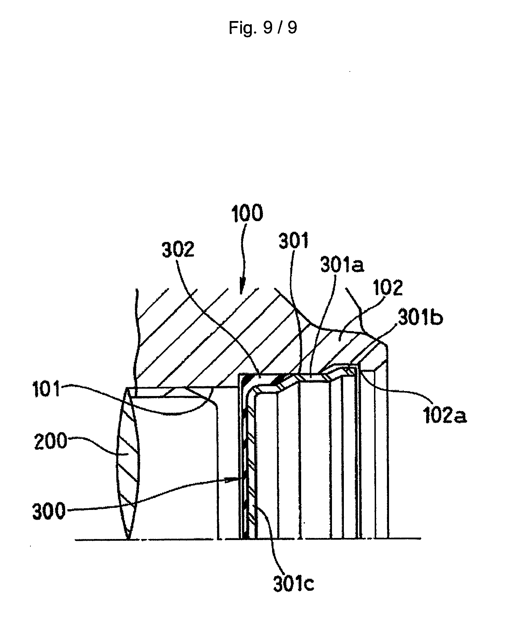

Fig. 9 is a one-side cross sectional view showing a bore plug in accordance with the other prior art solving the problem mentioned above by cutting along a plane passing through an axis thereof. In other words, in this prior art, a locking groove 102a which is continuous in a circumferential direction is formed in an inner peripheral surface of a housing 102, and an end edge 301 b of an outer peripheral tube portion 301 a of the plug main body 301 in the bore plug 300 is formed so as to have a slightly larger diameter than an inner peripheral surface of the housing 102. Since the end edge 301 b of the outer peripheral tube portion 301 a temporarily exposed forcibly to a diameter-reducing deformation due to a pressure contact with the inner peripheral surface of the housing 102 is expanded by a restoring force at a time of passing through the inner periphery of the locking groove 102a, in the process of compressing the bore plug 300 by setting the seal portion 302 to the head thereof, and is snap engaged with the locking groove 102a, the bore plug 300 can be securely prevented from coming off (refer to the following patent document 1 (Japanese Patent No. 3036820)).

However, in accordance with the structure in Fig. 9, in an attached state of the bore plug 300, since the Petri dish shaped plug main body 301 is directed to an inner side of the shaft hole 101 in the end plate portion 301 c, that is, is unevenly distributed in an inner end of the housing 102, an axial space within the shaft hole 101 to which the shaft 200 is inserted becomes narrow at that degree, and an inner periphery of the bore plug 300 inversely forms a useless space. Further, there is a risk that the seal portion 302 is damaged by an interference (a galling) with the locking groove 102a, at a time of pressure inserting the bore plug 300 to an inner periphery of the housing 102 so as to install.

### Summary of the Invention

The present invention is made by taking the points mentioned above into consideration, and a technical object of the present invention is to provide an installation structure of a bore plug which securely prevents the bore plug installed to a housing of an end portion of a hole portion from coming off, and prevents an internal space of the hole portion from being narrowed by the bore plug.

As a means for effectively achieving the technical object mentioned above, in accordance with the present invention, there is provided an installation structure of a bore plug in which the bore plug installed to a housing formed in a hole portion of a device is constituted by a plug main body having an end plate portion and an outer peripheral tube portion formed in an outer periphery of the end plate portion via a shoulder portion, and a seal portion integrally formed on an outer peripheral surface of the shoulder portion by a rubber-like elastic material, a locked protruding portion formed so as to protrude to an outer peripheral side from the outer peripheral tube portion is capable of being snap engaged with a locking groove formed on an inner peripheral surface of the housing and extending in a circumferential direction, and the seal portion is brought into close contact with an inner peripheral surface in an opening end portion side of the housing than the locking groove by a desired collapsing margin.

In the structure mentioned above, if the bore plug is inserted to the inner periphery of the housing in the hole portion of the device by setting an end portion of the outer peripheral tube portion extending to an opposite side to the end plate portion in the plug main body to a head at a time of installing the bore plug, the locked protruding portion formed in the end portion of the outer peripheral tube portion of the plug main body comes into pressure contact with the inner peripheral surface of the housing, thereby being temporarily exposed to the deformation toward the inner diameter side, and is thereafter snap engaged with the locking groove formed in the inner peripheral surface of the housing on the basis of a repulsion force against the deformation. At this time, the seal portion provided in the outer periphery of the shoulder portion of the plug main body is inserted to the housing in arrear of the locked protruding portion, and is brought into close contact with the inner peripheral surface in the opening end portion side at a desired collapsing margin. Accordingly, the seal portion is not interfered with the locking groove so as to be damaged. Further, in the plug main body, since the end plate portion is relatively positioned in the outer portion side of the housing in the installed state of the bore plug, the inner peripheral space of the plug main body forms a space which is continuously provided in the inner peripheral space of the hole portion.

In a further preferable aspect in the structure mentioned above, an outer diameter of the locked protruding portion is formed smaller than a close contact surface with the seal surface in the inner peripheral surface of the housing. In accordance with the structure mentioned above, since the outward edge portion of the locked protruding portion does not strongly interfere with the close contact surface with the seal portion in the inner peripheral surface of the housing in the process of inserting the bore plug to the housing, the close contact surface is not damaged by the galling, so that it is possible to prevent a sealing performance from being deteriorated.

Further, in the other preferable aspect, an outward edge portion of the locked protruding portion is chamfered or worked as a round surface. In accordance with the structure mentioned above, it is possible to prevent the seal close contact surface of the housing from being damaged by the galling by the outward edge portion of the locked protruding portion in the process of inserting the bore plug to the housing, so that it is possible to prevent the sealing performance from being deteriorated.

In accordance with the installation structure of the bore plug on the basis of the present invention, the bore plug installed to the housing of the hole portion is securely prevented from coming off on the basis of the engagement between the locked protruding portion of the plug main body and the locking groove of the housing. Further, since the inner peripheral space of the plug main body formed the space which is continuously provided in the inner peripheral space of the hole portion, it is possible to prevent the inner space of the hole portion from being narrowed by the installation of the bore plug, and the seal portion is not damaged in the installing process of the bore plug. Further, since the close contact surface with the seal portion is hard to be damaged by making the outer diameter of the locked protruding portion smaller than the close contact surface with the seal portion in the inner peripheral surface of the housing, or chamfering or working as the round surface the outward edge portion of the locked protruding portion, it is possible to secure an excellent sealing performance.

### Brief Descriptions of the Drawings

Fig. 1 is a cross sectional view of an uninstalled state showing a first embodiment of an installation structure of a bore plug in accordance with the present invention by cutting along a plane passing through an axis thereof;
Fig. 2 is a cross sectional view of an installed state of the bore plug showing the first embodiment in accordance with the present invention by cutting along the plane passing through the axis thereof;
Fig. 3 is an explanatory view showing an installing process of the bore plug in the first embodiment in accordance with the present invention;
Fig. 4 is a cross sectional view of an installed state showing a second embodiment of the installation structure of the bore plug in accordance with the present invention by cutting along a plane passing through an axis thereof;
Fig. 5 is an explanatory view showing an installing process of the bore plug in accordance with the second embodiment of the present invention;
Fig. 6 is a cross sectional view of an installed state showing a third embodiment of the installation structure of the bore plug in accordance with the present invention by cutting along a plane passing through an axis thereof;
Fig. 7 is an explanatory view showing an installing process of the bore plug in accordance with the third embodiment of the present invention;
Fig. 8 is a cross sectional view showing a bore plug in accordance with the prior art by cutting along a plane passing through an axis thereof; and
Fig. 9 is a cross sectional view showing a bore plug in accordance with the other prior art by cutting along a plane passing through an axis thereof.

### Description of the preferred Embodiment

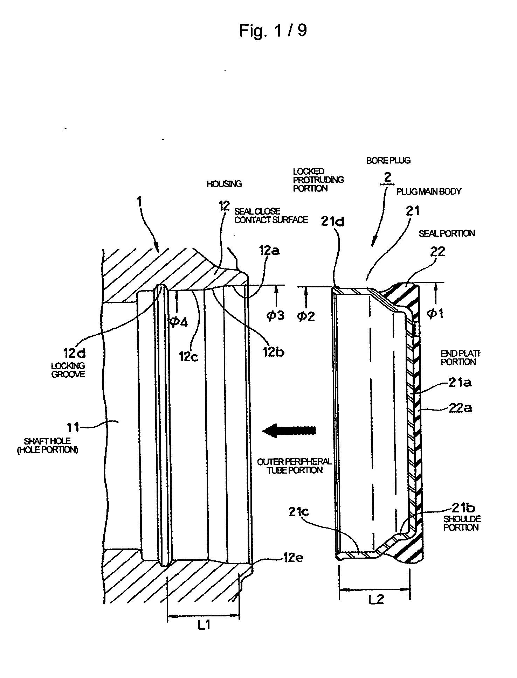

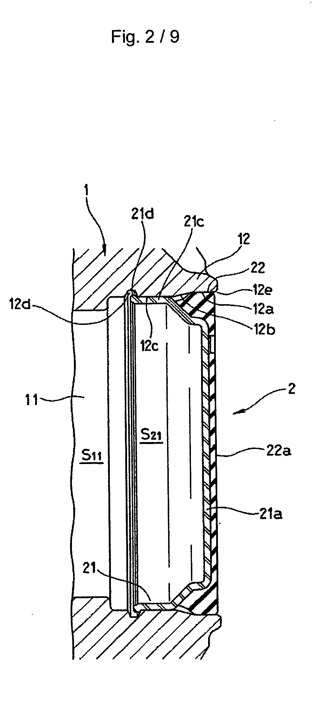

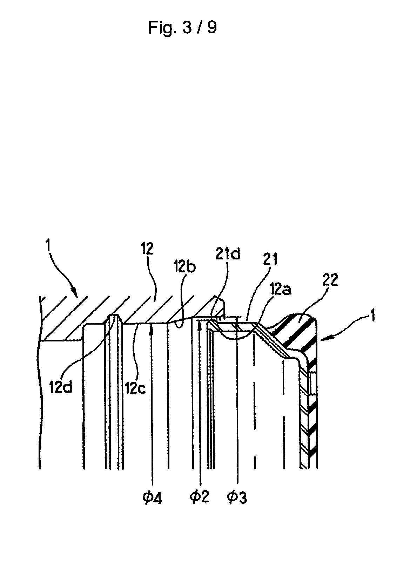

A description will be given below of a preferable embodiment of an installation structure of a bore plug in accordance with the present invention with reference to the accompanying drawings. Fig. 1 is a cross sectional view of an uninstalled state showing a first embodiment of an installation structure of a bore plug in accordance with the present invention by cutting along a plane passing through an axis thereof, Fig. 2 is a cross sectional view of an installed state of the same, and Fig. 3 is an explanatory view showing an installing process.

In Figs. 1 and 2, reference numeral 1 denotes a differential side gear in a transmission of a vehicle. The differential side gear 1 is provided with a shaft hole 11 spline fitted to a drive shaft (not shown) in an inner periphery so as to be open in an axial direction. Further, a housing 12 to which a bore plug 2 is installed is formed in an opening end portion in the shaft hole 11. In this case, the differential side gear 1 corresponds to "device" described in claim 1, and the shaft hole 11 corresponds to "hole portion" described in claim 1.

An inner peripheral surface of the housing 12 is constituted by a cylindrical surface shaped seal close contact surface 12a positioned closest to an opening end portion side, a gentle conical surface 12b being reduced in diameter little by little toward an inner side of the shaft hole 11, and a cylindrical surface shaped guide surface 12c extending toward an inner side of the shaft hole 11 from a small-diameter end portion. A locking groove 12d continuously extending in a circumferential direction is formed in the guide surface 12c. Further, an open end portion (an end portion of the seal close contact surface 12a) is formed as a chamfer or round surface 12e.

Reference numeral 2 denotes a bore plug installed to an inner periphery of the housing 12 of the differential side gear 1 in a close fitted state, and closing the shaft hole 11. The bore plug 2 is constituted by a plug main body 21 obtained by press molding a metal plate in a Petri dish shape, and a seal portion 22 integrally provided therein by a rubber-like elastic material.

In more detail, the plug main body 21 is constituted by a disc-shaped end plate portion 21 a, a shoulder portion 21 b formed in a bent manner in an outer periphery thereof and having a conical surface being increased in diameter little by little toward an opposite side to the end plate portion 21a, and an outer peripheral tube portion 21c extending in a cylindrical surface shape from a large-diameter end portion thereof, and an annular locked protruding portion 21d continuously extending in a circumferential direction is formed in an outer periphery of an end portion of the outer tube portion 21c. Further, the seal portion 22 is formed as a buildup shape continuous in a circumferential direction, in an outer peripheral surface of the shoulder portion 21b in the plug main body 21, and a part of the rubber-like elastic material is extended as an elastic film 22a, and covers an end plate portion 21 a of the plug main body 21.

In other words, the bore plug 2 is structured such that the seal portion 22 and the elastic film 22a are integrally formed in the plug main body 21 by positioning and setting the plug main body 21 to which a vulcanized adhesive agent is previously applied within a rubber vulcanizing metal mold (not shown) so as to clamp mold, filling an unvulcanized rubber material within a molding cavity defined between the plug main body 21 and an inner surface of the metal mold, and heating and pressurizing.

In this case, as shown in Fig. 1, a distance L2 in an axial direction between the locked protruding portion 21d in the plug main body 21, and the seal portion 22 approximately corresponds to a distance L1 in an axial direction between the locking groove 12d and the seal close contact surface 12a in the inner peripheral surface of the housing 12 of the differential side gear 1. In an uninstalled state of the bore plug 2, an outer diameter φ1 of the seal portion 22 is formed larger than an inner diameter φ3 of the seal close contact surface 12a, and an outer diameter φ2 of the locked protruding portion 21d is formed smaller than the outer diameter φ1 of the seal portion 22 and the inner diameter φ3 of the close contact surface 12a and larger than an inner diameter φ4 of the guide surface 12c. Further, the locking groove 12d of the housing 12 is formed as a magnitude capable of accommodating the locked protruding portion 21d.

In the structure mentioned above, in order to install the bore plug 2 to the housing 12 from the uninstalled state shown in Fig. 1, the bore plug 2 is first inserted to the inner periphery of the housing 12 by setting the locked protruding portion 21d to a head, in such a manner that the end portion (the locked protruding portion 21 d) of the outer peripheral tube portion 21 c of the plug main body 21 is directed to the inner side of the housing 12, and the seal portion 22 and the elastic film 22a are directed to the outer side of the housing 12.

In this inserting process, the locked protruding portion 21d of the plug main body 21 is first inserted to the housing 12 as shown in Fig. 3, however, since the outer diameter φ2 of the locked protruding portion 21d is smaller than the inner diameter φ3 of the seal close contact surface 12a, the locked protruding portion 21d does not strongly interfere with the seal close contact surface 12a. Accordingly, it is possible to prevent the seal close contact surface 12a from being damaged due to the interference with the locked protruding portion 21d.

Further, since the inner diameter φ4 of the guide surface 12c in the inner side of the seal close contact surface 12a is smaller than the outer diameter φ2 of the locked protruding portion 21d, the locked protruding portion 21d passing through the inner periphery of the seal close contact surface 12a finally interferes with the conical surface 12b formed smaller in diameter little by little toward the guide surface 12c. Accordingly, if the bore plug 2 is further inserted into the housing 12, the locked protruding portion 21d runs on the guide surface 12c while being forcibly exposed to a diameter-reducing deformation together with the outer peripheral tube portion 21 c, is elastically restored in an expanding direction by a repulsive force against the deformation at a time of reaching an inner periphery of the locking groove 12d, and is snap engaged with the locking groove 12d as shown in Fig. 2. Further, since the locked protruding portion 21d is not detached form the locking groove 12d until it is forcibly compressed, once it is engaged, even if a load in a come-off direction is applied to the bore plug 2, the bore plug 2 is securely prevented from coming off.

On the other hand, the seal portion 22 positioned in the outer periphery of the shoulder portion 21 b of the plug main body 21 is inserted to the seal close contact surface 12a in the inner peripheral surface of the housing 12 in arrear of the locked protruding portion 21 d and the outer peripheral tube portion 21 c of the plug main body 21. Further, since the distance in the axial direction between the locked protruding portion 21d and the seal portion 22 approximately corresponds to the distance in the axial direction between the seal close contact surface 12a and the locking groove 12d in the inner peripheral surface of the housing 12, and the outer diameter φ1 of the seal portion 22 is larger than the inner diameter φ3 of the seal close contact surface 12a, the seal portion 22 is pressure inserted to the inner periphery of the seal close contact surface 12a while being suitably compressed via the chamfer or round surface 12e of the opening end portion of the housing 12 in the process that the anticipating locked protruding portion 21d is snap engaged with the locking groove 12d.

Further, since the locking groove 12d is positioned at the back of the seal close contact surface 12a, and the seal portion 22 does not pass through the inner periphery of the locking groove 12d in the installing process of the bore plug 2 mentioned above, the seal portion 22 is not damaged by the interference with the locking groove 12d. Further, as described above, since the seal close contact surface 12a is not damaged by the galling with the locked protruding portion 21d, the seal portion 22 and the seal close contact surface 12a are well brought into close contact with each other, and an excellent sealing characteristic can be secured.

Further, in the installed state shown in Fig. 2, since the end plate portion 21 a of the plug main body 21 is positioned in the opening end portion side of the housing 12, an inner peripheral space S21 of the plug main body 21 substantially comes to a part of an inner peripheral space S11 of the shaft hole 11. Accordingly, there can be secured a long axial space to which a shaft (not shown) is inserted.

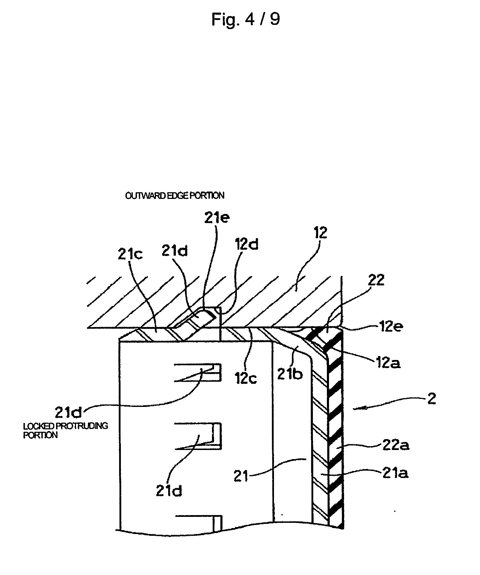

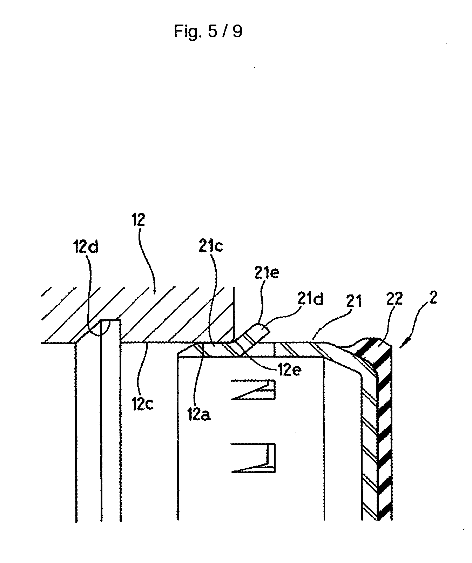

Next, Fig. 4 is a cross sectional view of an installed state showing a second embodiment of the installation structure of the bore plug in accordance with the present invention by cutting along a plane passing through an axis thereof, and Fig. 5 is an explanatory view showing an installing process of the bore plug in the second embodiment.

In Fig. 4, reference numeral 12 denotes a housing formed in an end portion of a shaft hole 11 of a device. An inner peripheral surface of the housing 12 is constituted by a cylindrical surface shaped seal close contact surface 12a positioned in an opening end portion side, and a cylindrical surface shaped guide surface 12c existing in an inner side thereof and continuously provided in the seal close contact surface 12a, and a locking groove 12d continuously extending in a circumferential direction is formed in the guide surface 12c. Further, an opening end portion (an end portion of the seal close contact surface 12a) of the housing 12 is formed as a chamfer or round surface 12e.

A bore plug 2 closing the shaft hole 11 by being installed to an inner periphery of the housing 12 is constituted by a plug main body 21 obtained by press molding a metal plate in a Petri dish shape, and a seal portion 22 integrally provided therein by a rubber-like elastic material, basically in the same manner as the first embodiment.

In more detail, the plug main body 21 is constituted by a disc-shaped end plate portion 21 a, a shoulder portion 21 b formed in a bent manner in an outer periphery thereof and formed as a conical tubular shape being increased in diameter little by little toward an opposite side to the end plate portion 21a, and an outer peripheral tube portion 21 c extending in a cylindrical surface shape from a large-diameter end portion thereof, and a plurality of locked protruding portions 21d punched out like a tongue piece to an outer peripheral side are formed in an intermediate portion in an axial direction of the outer peripheral tube portion 21c so as to be spaced at a uniform interval in a circumferential direction. The locked protruding portions 21d are diagonally punched out toward an inverse direction to an inserting direction of the bore plug 2 to the housing 12, and an outward edge portion 21e thereof is chamfered or worked as a round surface.

On the other hand, a locking groove 12d of the housing 12 is formed in a magnitude capable of accommodating the locked protruding portion 21d.

Preferably, it is set to a magnitude in which a leading end (the outward edge portion 21e) of the locked protruding portion 21d can interfere with a groove bottom.

Further, the seal portion 22 is formed as a build-up shape which is continuous in the circumferential direction, in an outer peripheral surface of the shoulder portion 21 b in the plug main body 21, and a part of a rubber-like elastic material is extended as an elastic film 22a, and covers the end plate portion 21 a of the plug main body 21.

In other words, in the same manner as the first embodiment, the bore plug 2 is structured such that the seal portion 22 and the elastic film 22a are integrally formed in the plug main body 21 by positioning and setting the plug main body 21 to which a vulcanized adhesive agent is previously applied within a rubber vulcanizing metal mold (not shown) so as to clamp mold, filling an unvulcanized rubber material within a molding cavity defined between the plug main body 21 and an inner surface of the metal mold, and heating and pressurizing.

A distance in an axial direction between the locked protruding portion 21d in the plug main body 21, and the seal portion 22 approximately corresponds to a distance in an axial direction between the locking groove 12d and the seal close contact surface 12a in the inner peripheral surface of the housing 12. In an uninstalled state of the bore plug 2, an outer diameter of the seal portion 22 is formed larger than an inner diameter of the seal close contact surface 12a. Further, an outer diameter of the outer peripheral tube portion 21 c in the plug main body 21 is set to a magnitude capable of being pressure inserted to the seal close contact surface 12a and the guide surface 12c of the housing 12 at a suitable fastening margin, and an outer diameter of the locked protruding portion 21 d is formed larger than an inner diameter of the guide surface 12c.

In the structure mentioned above, in order to install the bore plug 2 to the housing 12, the bore plug 2 is first inserted to the inner periphery of the housing 12 by setting the end portion of the outer peripheral tube portion 21 c to a head, as shown in Fig. 5.

In this inserting process, the locked protruding portion 21 d of the plug main body 21 interferes with the inner peripheral surface of the housing 12, whereby the locked protruding portion 21d is exposed to a bending deformation so as to come down. Further, since the locked protruding portions 21d are separated from each other in the circumferential direction, a repulsive force against the deformation is significantly small in comparison with the structure continuously provided in the circumferential direction such as the first embodiment, and since the outward edge portion 21e is chamfered or worked as the round surface, an aggression with respect to the inner peripheral surface of the housing 12 is small. Therefore, it is possible to prevent the seal close contact surface 12a from being damaged due to the interference with the locked protruding portion 21d.

Further, if the bore plug 2 is further inserted into the housing 12, the locked protruding portion 21d is elastically restored to the outer peripheral side by the repulsive force against the deformation at a time point when the locked protruding portion 21d finally reaches the inner periphery of the locking groove 12d, and is snap engaged with the locking groove 12d as shown in Fig. 4. Further, since the end portion of the locked protruding portion 21d directed to an opposite side to the inserting direction catches on the diametrical surface of the locking groove 12d, once it is engaged, even if a load in a come-off direction is applied to the bore plug 2, the bore plug 2 is securely prevented from coming off.

In this case, since the locked protruding portions 21d are separated from each other in the circumferential direction, there is a risk that a breakaway load becomes small in comparison with the structure continuously provided in the circumferential direction such as the first embodiment. However, if the locked protruding portion 21d comes into pressure contact in the diametrical direction of the locking groove 12d on the basis of an application of the load in the come-off direction to the bore plug 2, the locked protruding portion 12d is exposed to the bending deformation in such a manner as to rise to the outer peripheral side. Accordingly, the leading end of the locked protruding portion 21d comes into pressure contact with the groove bottom of the locking groove 12d, and the engaging force with the locking groove 12d is increased. Further, since the outer peripheral tube portion 21c is pressure inserted to the guide surface 12c of the housing 12 at a suitable fastening margin, the metal fitting force of the outer peripheral tube portion 21 c applied to the guide surface 12c of the housing 12 effectively contributes to an increase of the breakaway load. Therefore, it is possible to secure a desired breakaway load.

On the other hand, the seal portion 22 positioned in the outer periphery of the shoulder portion 21 b of the plug main body 21 is inserted to the seal close contact surface 12a in the inner peripheral surface of the housing 12 in arrear of the locked protruding portion 21 d and the outer peripheral tube portion 21 c of the plug main body 21. Further, since the distance in the axial direction between the locked protruding portion 21 d and the seal portion 22 approximately corresponds to the distance in the axial direction between the seal close contact surface 12a and the locking groove 12d in the inner peripheral surface of the housing 12, and the outer diameter of the seal portion 22 is larger than the inner diameter of the seal close contact surface 12a, the seal portion 22 is pressure inserted to the inner periphery of the seal close contact surface 12a while being suitably compressed via the chamfer or round surface 12e of the opening end portion of the housing 12 in the process that the anticipating locked protruding portion 21 d is snap engaged with the locking groove 12d.

Further, in this embodiment, since the locking groove 12d is also positioned at the back of the seal close contact surface 12a, and the seal portion 22 does not pass through the inner periphery of the locking groove 12d in the installing process of the bore plug 2 mentioned above, the seal portion 22 is not damaged by the interference with the locking groove 12d. Further, as described above, since the seal close contact surface 12a is not damaged by the interference with the locked protruding portion 21d, the seal portion 22 and the seal close contact surface 12a are well brought into close contact with each other, and an excellent sealing characteristic can be secured.

Further, in the installed state shown in Fig. 4, since the end plate portion 21 a of the plug main body 21 is positioned in the opening end portion side of the housing 12, an inner peripheral space S21 of the plug main body 21 substantially comes to a part of an inner peripheral space of the shaft hole 11. Accordingly, there can be secured a long axial space.

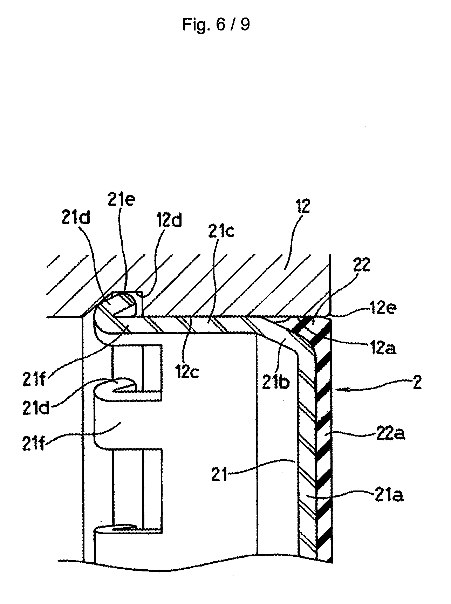

Next, Fig. 6 is a cross sectional view of an installed state showing a third embodiment of the installation structure of the bore plug in accordance with the present invention by cutting along a plane passing through an axis thereof, and Fig. 5 is an explanatory view showing an installing process of the bore plug in the third embodiment.

This embodiment basically has the same structure as the second embodiment in Figs. 4 and 5 mentioned above. In other words, a bore plug 2 is constituted by a plug main body 21 obtained by press molding a metal plate in a Petri dish shape, and a seal portion 22 integrally provided therein by a rubber-like elastic material. A different point from the second embodiment exists in a shape of a plurality of locked protruding portions 21d formed in the plug main body 21 so as to be spaced at a uniform interval in a circumferential direction.

In more detail, the locked protruding portion 21d is folded back to an outer peripheral side so as to form approximately a J-shaped form from a leading end of a leaf spring portion 21f formed so as to protrude in an extending direction from a leading end of an outer peripheral tube portion 21c in the plug main body 21, and is directed to an opposite side to an inserting direction of the bore plug 2 to the housing 12, and an outward edge portion 21 e thereof is chamfered or worked as a round surface. The other structures are the same as the second embodiment.

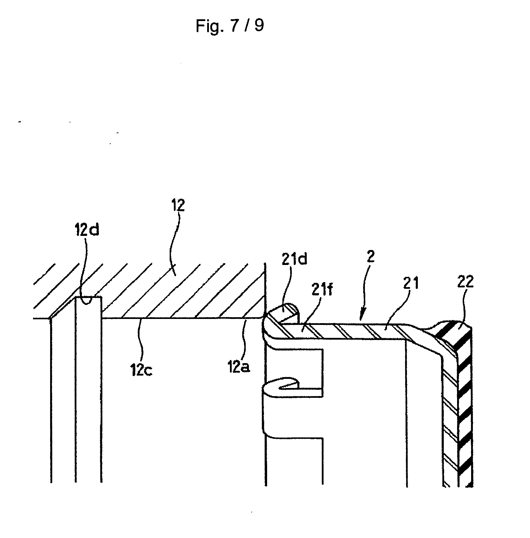

In the structure mentioned above, in order to install the bore plug 2 to the housing 12, the bore plug 2 is inserted to the inner periphery of the housing 12 by setting the locked protruding portion 21 d of the plug main body 21 to a head, as shown in Fig. 7. Further, in this inserting process, the locked protruding portion 21d interferes with the inner peripheral surface of the housing 12, whereby the locked protruding portion 21d is exposed to a bending deformation to an inner peripheral side together with the leaf spring 21f. Further, since the locked protruding portion 21d and the leaf spring portion 21f are separated from each other in the circumferential direction, a repulsive force against the deformation is small in comparison with the structure continuously provided in the circumferential direction, and since the outward edge portion 21 e is chamfered or worked as the round surface, an aggression with respect to the inner peripheral surface of the housing 12 is small. Therefore, it is possible to prevent the seal close contact surface 12a from being damaged due to the interference with the locked protruding portion 21d.

Further, if the bore plug 2 is further inserted into the housing 12, the locked protruding portion 21d and the leaf spring portion 21f are elastically restored to the outer peripheral side by the repulsive force against the deformation at a time point when the locked protruding portion 21d finally reaches the inner periphery of the locking groove 12d, and is snap engaged with the locking groove 12d as shown in Fig. 6. Further, since the end portion of the locked protruding portion 21d directed to an opposite side to the inserting direction catches on the diametrical surface of the locking groove 12d, once it is engaged, even if a load in a come-off direction is applied to the bore plug 2, the bore plug 2 is securely prevented from coming off.

In this case, since the locked protruding portions 21d are separated from each other in the circumferential direction, there is a risk that a breakaway load becomes small in comparison with the structure continuously provided in the circumferential direction. However, since the outer peripheral tube portion 21c is pressure inserted to the guide surface 12c of the housing 12 at a suitable fastening margin, whereby the metal fitting force of the outer peripheral tube portion 21 c applied to the guide surface 12c of the housing 12 effectively contributes to an increase of the breakaway load, it is possible to secure a desired breakaway load.

On the other hand, the seal portion 22 is pressure inserted to the inner periphery of the seal close contact surface 12a while being suitably compressed via the chamfer or round surface 12e of the opening end portion of the housing 12 in the process that the anticipating locked protruding portion 21 d is snap engaged with the locking groove 12d.

Further, in this embodiment, since the locking groove 12d is also positioned at the back of the seal close contact surface 12a, and the seal portion 22 does not pass through the inner periphery of the locking groove 12d in the installing process of the bore plug 2 mentioned above, the seal portion 22 is not damaged by the interference with the locking groove 12d. Further, since the seal close contact surface 12a is not damaged by the interference with the locked protruding portion 21d, the seal portion 22 and the seal close contact surface 12a are well brought into close contact with each other, and an excellent sealing characteristic can be secured.

Further, in the installed state shown in Fig. 6, since the end plate portion 21 a of the plug main body 21 is positioned in the opening end portion side of the housing 12, an inner peripheral space of the plug main body 21 substantially comes to a part of an inner peripheral space of the shaft hole 11. Accordingly, there can be secured a long axial space.

## Claims

1. An installation structure of a bore plug **characterized in that** the bore plug (2) installed to a housing (12) formed in a hole portion (11) of a device (1) is constituted by a plug main body (21) having an end plate portion (21a) and an outer peripheral tube portion (21 c) formed in an outer periphery of the end plate portion via a shoulder portion (21 b), and a seal portion (22) integrally formed on an outer peripheral surface of the shoulder portion (21 b) by a rubber-like elastic material, a locked protruding portion (21d) formed so as to protrude to an outer peripheral side from the outer peripheral tube portion (21 c) is capable of being snap engaged with a locking groove (12d) formed on an inner peripheral surface of the housing (12) and extending in a circumferential direction, and the seal portion (22) is brought into close contact with an inner peripheral surface in an opening end portion side of the housing (12) than the locking groove (12d) by a desired collapsing margin.

2. An installation structure of a bore plug as claimed in claim 1, **characterized in that** an outer diameter (φ2) of the locked protruding portion (21d) is formed smaller than a close contact surface (12a) with the seal surface (22) in the inner peripheral surface of the housing (12).

3. An installation structure of a bore plug as claimed in claim 1, **characterized in that** an outward edge portion (21 e) of the locked protruding portion (21 d) is chamfered or worded as a round surface.
